# EUROPEAN PATENT SPECIFICATION

(11) **EP 0 578 217 B1**
(45) Date of publication and mention of the grant of the patent: **30.10.1996**
(21) Application number: 93110848.4
(22) Date of filing: 07.07.1993
(51) Int. Cl.: B24B 7/22, B23Q 5/40, B23Q 1/26

(54) **Bridge-and-table milling machine particularly for machining stone-like materials and the like**
Brückenartige Fräsmaschine, insbesondere für Stein oder dergleichem
Fraiseuse à portique en particulier pour pierre en similaires

(30) Priority: 10.07.1992 IT MI921690
(43) Date of publication of application: 12.01.1994
(73) Proprietor: PEDRINI S.p.A., I-24060 Carobbio Degli Angeli Bergamo (IT)
(72) Inventor: Pedrini, Luigi, I-24060 Carobbio Degli Angeli (IT)
(74) Representative: Modiano, Guido, Dr.-Ing.

(56) References cited:
- EP-A- 0 477 766
- DE-A- 3 916 169
- PATENT ABSTRACTS OF JAPAN vol. 9, no. 164 (M-395)10 July 1985 & JP-A-60 039 060 (KIYOUDOUKUMIAI SAGAKEN TETSUKOU KOUGIYOUKAI) 28 February 1985

## Description

The present invention relates to a bridge-and-table milling machine particularly for machining stone-like materials and the like.

The machining of blocks of stone-like materials and the like uses bridge-and-table milling machines equipped with tools mounted on carriages which are coupled, so that they can perform a translatory motion, to the related bridges in order to perform machining operations such as cuts, millings, burnishings, polishings and the like on blocks in order to obtain parts having the most disparate shapes.

The technical problem posed by this type of bridge milling machine is mainly linked to the precision with which each machining operation can be performed, or rather to the mechanical precisions with which these milling machines can work.

It is known from JP-A-60-39060 a milling machine as defined in the preamble of claim 1.

Currently, the movement of the bridge along the supporting rails or tracks is in fact obtained by means of couplings constituted by a rack, which is fixed on the supporting and guiding rails, and by a pinion, which is connected to the bridge so as to produce the translatory motion of the bridge resting with wheels on said tracks or rails.

First of all, this type of connection creates only a unilateral coupling, so that it does not allow good precision and stability in movement, and there are also relatively large contact plays between the pinion and the rack which do not allow high precision in movements.

The tool-holder carriage is generally connected to the bridge by means of rack-and-pinion couplings, by means of belts, or by means of a piston and by means of elements of the sliding-block type causing controlled sliding of the carriage along the bridge.

One thus obtains a unilateral sliding coupling which may or may not have elastic contrasts but always has plays in the connection and in the transmission which negatively affect the obtainable machining precision.

Furthermore, bridge milling machines currently in use operate with their disk fixed with respect to an ideal vertical plane or, if they can tilt the disk with manually-actuated or motorized mechanisms, they also rotationally involve the vertical guides for moving the tool toward the part, thus moving a complicated structure of considerable dimensions, which, due to the presence of the part being machined,generally limit the tilt arc to 45°.

A principal object of the present invention is indeed to eliminate the drawbacks described above by providing a bridge-and-table milling machine particularly for machining stone-like materials and the like, which simplifies and improves the precision of the movement of the carriage or bridge with respect to its rails, introducing bilateral guiding and actuation elements having rolling bodies pre-loaded so that they eliminate all plays by reacting to forces in any direction.

Another object of the present invention is to provide a milling machine which simplifies and improves the precision of the movement for tilting the disk with respect to the bridge, thus allowing full automation of all movements, with the possibility of obtaining machining angles which can be preselected in any way.

Another object of the present invention is to provide a bridge milling machine which, by virtue of its particular constructive characteristics, gives the greatest assurances of reliability and safety in use.

With these and other objects in view, there is provided, according to the present invention, a bridge-and-table milling machine particularly for machining stone-like materials and the like, as defined in the appended claim 1.

The characteristics and advantages of the bridge-and-table milling machine particularly for machining stone-like materials and the like, according to the present invention, will become apparent from the following description of a preferred but not exclusive embodiment thereof, illustrated only by way of non-limitative example in the accompanying drawings, wherein:
figure 1 is a plan view of a bridge milling machine according to the present invention;
figure 2 is a partially sectional front elevation view of the bridge milling machine according to the present invention;
figure 3 is a partially sectional front elevation view of a threaded bar of the bridge, along the rails;
figure 4 is a sectional front elevation view of the bridge together with the carriage;
figure 5 is an enlarged-scale and partially sectional front elevation view of the coupling between the carriage and the transverse bar of the bridge;
figure 6 is a partially sectional plan view of the coupling between the threaded bar and the bridge;
figure 7 is an enlarged-scale sectional front elevation view of a tool-holder head associated with the carriage;
figure 8 is a sectional front elevation view of a table for supporting a monolith;
figure 9 is a sectional plan view of the table, taken along the line IX-IX of figure 8.

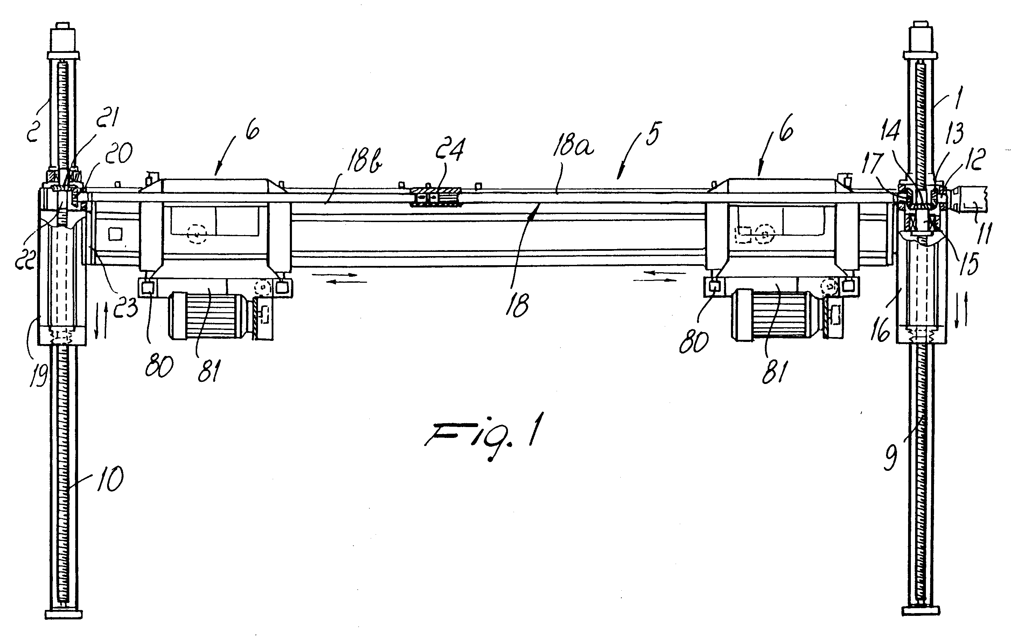

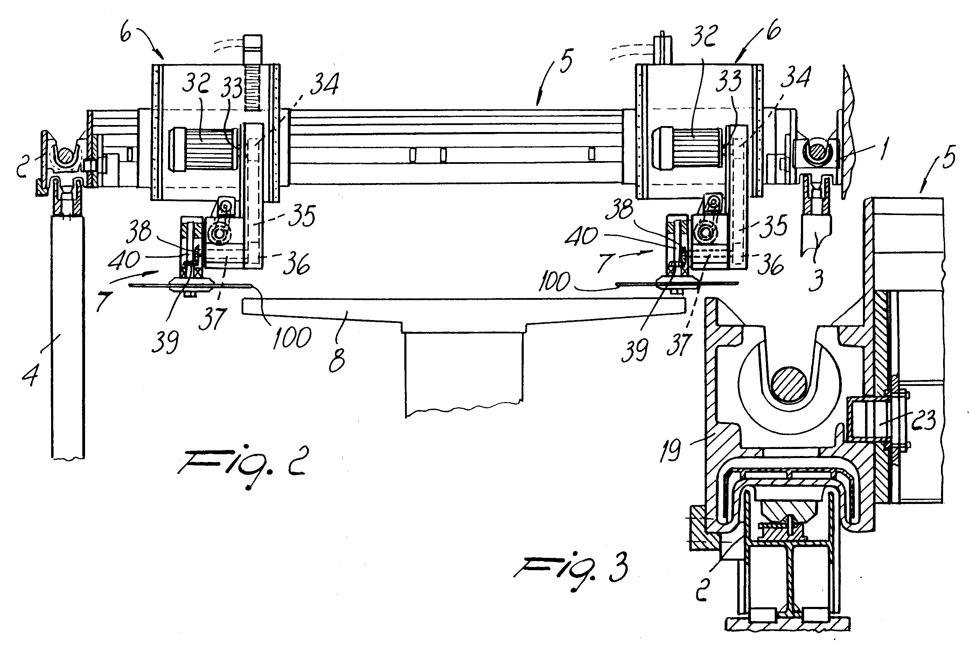

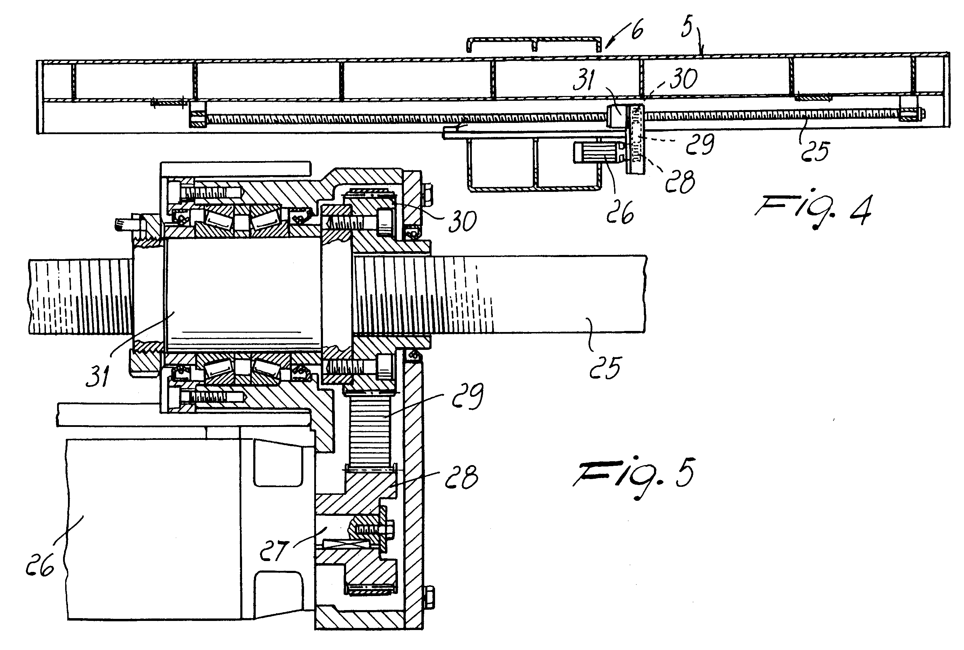

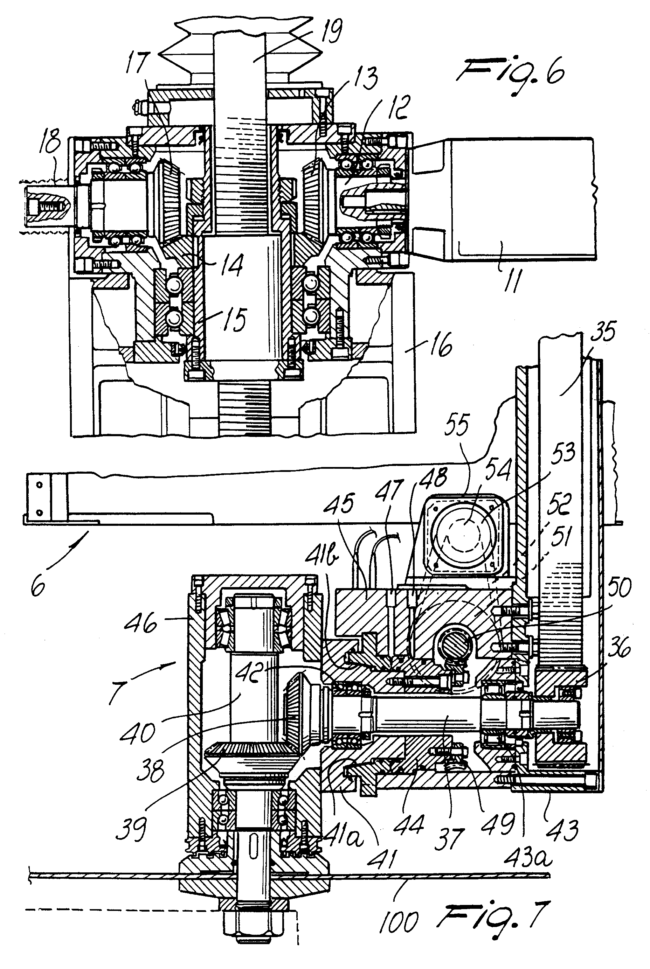

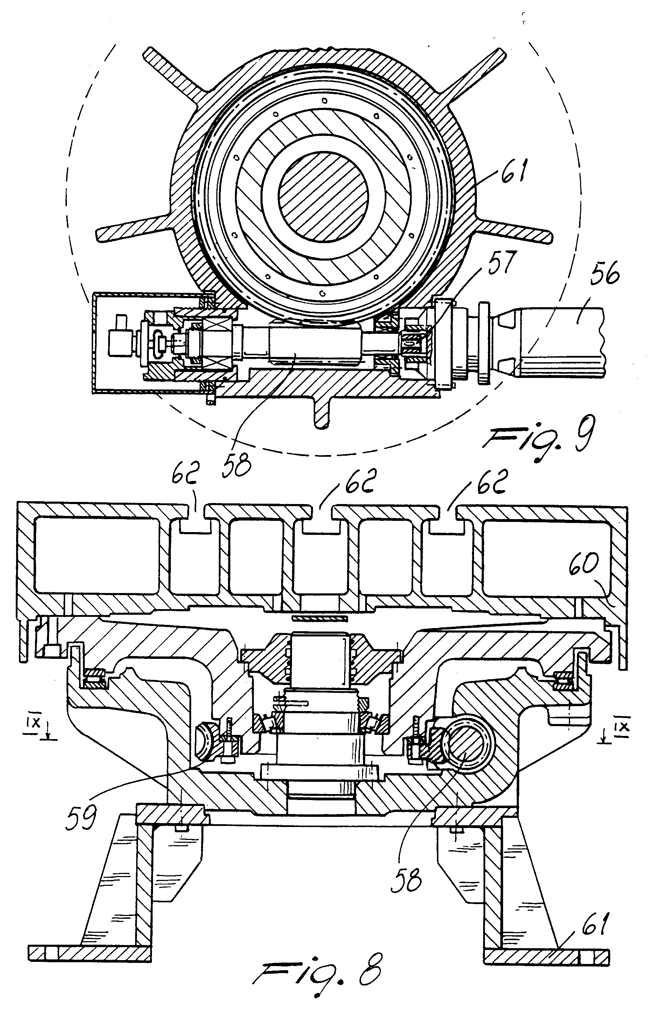

With reference to the above figures, the bridge-and-table milling machine particularly for machining stone-like materials and the like, according to the present invention, comprises two elongated longitudinal rails 1 and 2 supported by mutually parallel masonry structures 3 and 4 on which a bridge, generally designated by the reference numeral 5, is coupled so that it can perform a translatory motion with bilateral coupling.

The bridge supports a carriage 6 which can perform a translatory motion and is provided with a tool-holder head 7 for performing machining operations on a monolithic part made of stone-like material (not shown), which is placed on a table 8.

A respective elongated longitudinal threaded bar 9 and 10 is rigidly fixed on each rail 1 and 2 and is coupled to first means for moving the bridge 5.

The first movement means comprise a first motor 11 rigidly coupled to the bridge 5; its drive shaft 12 has a first pinion 13 keyed thereon which meshes with a second pinion 14 keyed on a first female thread 15 which is rotatably supported by a first coupling portion 16 of the bridge 5. The female thread 15 engages the thread of the threaded bar 9.

The second pinion 14 meshes with a third pinion 17 keyed on a first transmission shaft 18 extending over the entire span of the bridge up to a second coupling portion 19 for the coupling of the bridge 5 to the rail 2, which is parallel to the preceding one.

A fourth pinion 20 is keyed on one end of the first transmission shaft 18 which fits in the second coupling portion 19; said fourth pinion meshes with a fifth pinion 21 keyed on a second female thread 22 which is rotatably supported by the second coupling portion 19.

The second female thread 22 engages the thread of the threaded bar 10.

The coupling between the fourth pinion 20 and the fifth pinion 21 is provided in such a manner that the two female threads 15 and 22 rotate in the same direction, allowing the first motor 11 to move the bridge along the rails 1 and 2 without the possibility of any false movements which would tilt the bridge 5 irregularly with respect to the rails 1 and 2, since a bilateral coupling with null plays in all directions is provided by means of pre-loaded kinematic pairs.

The bridge 5 is rigidly fixed to the first coupling portion 16, whereas it is connected to the second coupling portion 19 with the interposition of a first slip joint 23 which compensates for thermal elongations of said bridge, in order to avoid the forming of dangerous tensions which might cause damage and create irregularities in the translatory motion.

Similarly, the first transmission shaft 18 has, in a median portion, a second slip joint 24 dividing it into two portions 18a and 18b rigidly rotationally connected to each other. The second slip joint 24 also compensates for thermal elongations of the portions 18a and 18b of the first transmission shaft 18.

Preferably, for the sake of precision in movement and of speed in said rotation, the female threads 15 and 22 are of the pre-loaded ball-screw type, thus significantly reducing coupling friction and eliminating plays in the transmission.

At least one threaded transverse bar 25 is rigidly fixed on the bridge 5, and second means for moving the carriage 6 are coupled on said bar.

The second movement means comprise a second motor 26 rigidly fixed to the carriage 6; its drive shaft 27 has a first gear 28 keyed thereon, and a first toothed transmission belt 29 engages said first gear; said first belt meshes with a second gear 30 keyed on a third female thread 31 which is rigidly coupled to the carriage 6 and rotates angularly with respect to it. The third female thread 31 engages the surface thread of the transverse bar 25. The second motor 26 moves the respective carriage 6 along the bridge 5.

For the sake of precision in movement and of speed in said rotation, the third female thread 31 is preferably of the pre-loaded ball-screw type.

Each tool-holder head 7 is provided with means for vertical translatory motion, i.e. at right angles to the extension of the bridge, which are constituted by a slider guide, designated by the reference numeral 80, on which there moves the slider 81 supporting the tool-holder head, which can perform a translatory motion by means of a screw-and-nut coupling.

The tool-holder head 7 is furthermore rotatable angularly with respect to the related slider 81 by virtue of mechanical/fluidynamic rotation and locking means.

The mechanical/fluidynamic rotation and locking means comprise a third motor 32 for rotating a tool 100 supported at the tool-holder head 7; the drive shaft 33 of said third motor has a third gear 34 keyed thereon, a second toothed belt 35 engages said third gear and also engages a gear 36 which is rigidly rotationally coupled to a second transmission shaft 37 meshing, by means of a sixth pinion 38, with a seventh pinion 39 keyed on the tool-holder shaft 40.

The second transmission shaft 37 is rotatably supported within a first guiding element 41, by means of bearings 42, and within a second guiding element 43, with axial sliding bearings 43a interposed.

An annular piston 44 is rigidly connected to the first guiding element 41 and is actuatable fluidynamically inside a chamber formed by a first box-like element 45, in which there are openings 47 and 48 for the inflow and the outflow of fluid for moving the annular piston 44 and consequently the first guiding element 41, which is rigidly coupled thereto in translatory motion.

The first guiding element 41 is provided with a centering cone 41a for coupling to, and uncoupling from, a conical seat 41b according to the translatory motion of the shaft 37; said conical seat 41b is formed by an element which in practice closes one end of the sliding chamber of the piston 44.

A helical gear 49 is rigidly coupled to the piston 44 and meshes with a threaded shaft 50.

The threaded shaft 50 is rotated by a sixth gear 51 on which a third toothed belt 52 engages; said third belt is in turn connected to a seventh gear 53 keyed on a drive shaft 54 of a motor 55 supported by the box-like element 45.

When pressurized fluid is fed into the opening 48, the annular piston 44 performs a translatory motion so that it disengages the conical coupling between the surfaces 41a and 41b, with the possibility of performing angular positioning by means of the actuation of the shaft 50.

Once positioning has been achieved, the introduction of pressurized fluid through the opening 47 causes the retraction of the piston 44, with the consequent mutual locking of the surfaces 41a and 41b keeping the assembly stably in position.

Furthermore, the coupling between the helical gear 49 and the shaft 50 acts as an additional safety locking element.

The table 8 is rotatable angularly with respect to the bridge milling machine by virtue of third movement means comprising a fifth motor 56, the drive shaft 57 of which is coupled to a play-recovering screw 58 meshing with an eighth gear 59 with semicircular teeth which is rigidly fixed to a portion 60 of the table 8 which rotates with respect to its base 61.

The table 8 furthermore has, on its rotating portion 60, a plurality of receptacles 62 within which fixing wedges (not shown) for the monolith being machined (not shown) are insertable.

It should be stressed that advantageously all the motors are mutually coordinated in their mutual movements by a numeric-control unit in order to allow machining operations with an axis of incidence variable in any manner with respect to the monolith, obtaining a preset composition of movements.

Practical tests have shown that the bridge-and-table milling machine according to the present invention achieves the intended objects, constituting a valid alternative to bridge milling machines currently in use, especially due to its higher precision in the positioning of the bridge and of the carriage, in addition to the possibility of rotating the tool at any angle of incidence on a monolith being machined, furthermore giving said tool the necessary advancement and translatory components to allow these machining operations with particular angles of incidence.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Bridge-and-table milling machine particularly for machining stone-like materials and the like, comprising mutually parallel elongated longitudinal rails (1, 2) on which a bridge (5) is coupled so that it can perform a translatory motion; a table (8) whereon said stone-like materials are arranged; said bridge supporting at least one carriage (6) coupled thereto so that it can perform a translatory motion; said carriage being provided with a tool-holder head (7) for performing machining operations on a monolith made of stone-like materials arranged on said table (8); an elongated longitudinal threaded bar (9, 10) rigidly coupled to each of said rails and being coupled to first means (11-22) for moving said bridge; at least one threaded transverse bar (25) being rigidly fixed on said bridge; second means (26, 31) for moving the carriage being coupled to said transverse bar; said tool-holder head (7) being able to perform a translatory motion along a direction substantially vertical, said motion being at right angles to the extension of said bridge; said tool-holder head (7) being angularly rotatable with respect to the related carriage by virtue of mechanical/fluidynamic rotation means (32, 55); third movement means (56-61) adapted to angularly rotate said table (8) with respect to said bridge (5);
**characterized in that** said first movement means (11-22) comprise a first motor (11) rigidly coupled to said bridge, the drive shaft (12) of said first motor having a first pinion (13) keyed thereto, said first pinion meshing with a second pinion (14) keyed on a first female thread (15) rotatably supported by a first coupling portion (16) for coupling said bridge to one of said rails (1, 2), said first female thread engaging the surface thread of said threaded bar, said second pinion meshing with a third pinion (17) keyed on a first transmission shaft (18) extending over the entire span of said bridge up to a second coupling portion (19) for coupling said bridge to the other rail, which is parallel to the preceding one, a fourth pinion (20) being keyed on one end of said first transmission shaft (18) entering said second coupling portion (19), said fourth pinion (20) coupling to a fifth pinion (21) keyed on a second female thread (22) which is rotatably supported by said second coupling portion (19) of said bridge (5), said second female thread (22) engaging the thread of the respective threaded bar, said first motor being suitable to produce the translatory motion of said bridge along said rails (1, 2), said bridge (5) being rigidly fixed to said first coupling portion (16) and being fixed to said second coupling portion (19) by means of a first slip joint (23) suitable to compensate for thermal elongations of said bridge, and in that said first transmission shaft (18) has, in a median portion, a second slip joint (24) dividing it into two portions (18a, 18b) mutually rotationally coupled, said second slip joint being suitable to compensate for thermal elongations of said portions (18a, 18b) of said first transmission shaft (18).

2. Milling machine according to claim 1, characterized in that said first and second female threads (16, 22) are of the ball-screw type.

3. Milling machine according to one or more of the preceding claims, characterized in that said second movement means comprise a second motor (26) rigidly fixed to said carriage, the drive shaft (27) of said second motor having a first gear (28) keyed thereon, a first toothed transmission belt (29) engaging said first gear, and also engaging a second gear (30) keyed on a third female thread (31) which is rigidly coupled to said carriage and rotates angularly with respect to it, said third female thread engaging the surface thread of the respective transverse bar, said second motor being suitable to produce the translatory motion of said carriage along said bridge.

4. Milling machine according to one or more of the preceding claims, characterized in that said third female thread is of the ball-screw type.

5. Milling machine according to one or more of the preceding claims, characterized in that said mechanical/fluidynamic rotation means comprise a third motor (32) for actuating a tool (100) supported at said tool-holder head, the drive shaft (33) of said motor having a third gear (34) keyed thereon, a second toothed belt (35) being engaged on said third gear and in turn engaging a fourth gear (36) which is rigidly rotationally coupled to a second transmission shaft (37) having a sixth pinion (38) keyed on another end thereof, said sixth pinion meshing with a seventh pinion (39) keyed on a tool-holder shaft (40), said second transmission shaft being rotatably supported within a first guiding element (41) by means of the interposition of bearings (42) and within a second guiding (43) element by means of axial sliding bearings (43a).

6. Milling machine according to one or more of the preceding claims, characterized in that it comprises an annular piston (44) rigidly coupled to said first guiding element and actuatable fluidynamically, said first guiding element forming a frustum-like coupling (41a) which is removably associable in a frustum-shaped seat (41b) formed in an element constituting the closure of the sliding chamber of said annular piston, the sliding chamber of said annular piston being formed in a box-like element (45) having openings (47-48) for the inflow and the outflow of the fluid for moving said annular piston.

7. Milling machine according to one or more of the preceding claims, characterized in that it comprises a helical gear (49) rigidly associated with said annular piston and meshing with a third transmission shaft (50) rotated by a sixth gear (51) on which a third toothed belt (52) engages, said third belt extending around a seventh gear (53) keyed on a drive shaft (54) of a fourth motor (55) which is rigidly supported by said first box-like element, in order to rotate the tool-holder assembly.

8. Milling machine according to one or more of the preceding claims, characterized in that said third movement means comprise a fifth motor (56), the drive shaft (57) of which is coupled to a play-recovering screw (58) meshing with an eighth gear (59) rigidly fixed to a portion (60) of said table which rotates with respect to a base (61) thereof.

9. Milling machine according to one or more of the preceding claims, characterized in that it comprises a numeric-control unit for driving and coordinating all of said motor means.

## Patentansprüche

1. Brücken-/Tisch-Fräsmaschine vor allem zum spanenden Bearbeiten von steinähnlichen Materialien und dergleichen, mit zueinander parallelen, länglichen, längsverlaufenden Schienen (1, 2), auf denen eine Brücke (5) derart angeordnet ist, daß sie eine Schubbewegung durchführen kann, einem Tisch (8), auf dem die steinähnlichen Materialien angeordnet werden, wobei die Brücke mindestens einen Schlitten (6) trägt, der damit derart gekoppelt ist, daß er eins Schubbewegung durchführen kann, wobei der Schlitten mit einem Werkzeughalterkopf (7) zum Durchführen von spanenden Bearbeitungsvorgängen an einem Monolithen versehen ist, der aus einem steinähnlichen Material hergestellt und auf dem Tisch (8) angeordnet ist, einer länglichen, längs verlaufenden Gewindestange (9, 10), die unbeweglich mit jeder der Schienen verbunden ist und mit ersten Mitteln (11-22) zum Bewegen der Brücke gekoppelt ist, mindestens einer querverlaufenden Gewindestange (25), die unbeweglich auf der Brücke befestigt ist, zweiten Mitteln (26, 31) zum Bewegen des Schlittens, die mit der querverlaufenden Stange gekoppelt sind, wobei der Werkzeughalterkopf (7) eine Schubbewegung entlang einer im wesentlichen vertikalen Richtung durchführen kann und diese Bewegung rechtwinklig zu der Ausdehnung der Brücke erfolgt, wobei der Werkzeughalterkopf (7) mit Hilfe von mechanischen/fluiddynamischen Rotationsmitteln (32, 55) hinsichtlich des damit in Bezug stehenden Schlittens verschwenkbar ist, dritten Bewegungsmitteln (56-61), die den Tisch (8) hinsichtlich der Brücke (5) verschwenken können,
**dadurch gekennzeichnet**, daß die ersten Bewegungsmittel (11-22) einen ersten Motor (11) umfassen, der starr mit der Brücke gekoppelt ist, wobei die Antriebswelle (12) des ersten Motors ein damit verkeiltes erstes Ritzel (13) aufweist, das erste Ritzel mit einem zweiten Ritzel (14) kämmt, das mit einem ersten Innengewinde (15) verkeilt ist, das drehbar von einem ersten Verbindungsabschnitt (16) zum Koppeln der Brücke mit einer der Schienen (1, 2) gehalten wird, wobei das erste Innengewinde mit dem Oberflächengewinde der Gewindestange in Eingriff kommt, das zweite Ritzel mit einem dritten Ritzel (17) kämmt, das mit einer ersten Übertragungswelle (18) verkeilt ist, die sich über die gesamte Spannweite der Brücke bis zu einem zweiten Verbindungsabschnitt (19) zum Koppeln der Brücke mit der anderen Schiene erstreckt, die parallel zu der Vorhergenannten ist, ein viertes Ritzel (20), das an einem Ende der ersten Übertragungswelle (18) verkeilt ist, welches sich in den zweiten Verbindungsabschnitt (19) hinein erstreckt, wobei das vierte Ritzel (20) mit einem fünften Ritzel (21) gekoppelt ist, das mit einem zweiten Innengewinde (22) verkeilt ist, das drehbar von dem zweiten Verbindungsabschnitt (19) der Brücke (5) gehalten wird, wobei das zweite Innengewinde (22) mit dem Gewinde der jeweiligen Gewindestange in Eingriff kommt, der erste Motor dazu geeignet ist, die Schubbewegung der Brücke entlang den Schienen (1, 2) zu erzeugen, und die Brücke (5) starr mit dem ersten Verbindungsabschnitt (16) verbunden ist und an dem zweiten Verbindungsabschnitt (19) mit Hilfe einer ersten Ausdehnungskupplung (23) befestigt ist, die dazu geeignet ist, die Wärmeausdehnungen der Brücke auszugleichen, und daß die erste Übertragungswelle (18) in einem mittleren Abschnitt eine zweite Ausdehnungskupplung (24) aufweist, die diese in zwei Abschnitte (18a, 18b) unterteilt, die drehbar zueinander gekoppelt sind, wobei die zweite Ausdehnungskupplung dazu geeignet ist, die Wärmeausdehnungen der Abschnitte (18a, 18b) der ersten Übertragungswelle (18) auszugleichen.

2. Fräsmaschine nach Anspruch 1, dadurch gekennzeichnet, daß die ersten und zweiten Innengewinde (16, 22) von der Kugelumlaufspindel-Art sind.

3. Fräsmaschine nach einem oder mehreren der vorhergehenden Ansprüche, dadurch gekennzeichnet, daß die zweiten Bewegungsmittel einen zweiten Motor (26) umfassen, der starr an dem Schlitten befestigt ist, wobei die Antriebswelle (27) des zweiten Motors ein erstes damit verkeiltes Zahnrad (28) aufweist, ein erster gezahnter Transmissionsriemen (29) mit dem ersten Zahnrad in Eingriff kommt und auch mit einem zweiten Zahnrad (30) in Eingriff kommt, das mit einem dritten Innengewinde (31) verkeilt ist, welches starr mit dem Schlitten verbunden ist und sich in einem Winkel relativ zu diesem dreht, das dritte Innengewinde mit dem Oberflächengewinde der jeweiligen querverlaufenden Stange in Eingriff kommt, und der zweite Motor die Schubbewegung des Schlittens entlang der Brücke erzeugen kann.

4. Fräsmaschine nach einem oder mehreren der vorhergehenden Ansprüche, dadurch gekennzeichnet, daß das dritte Innengewinde von der Kugelumlaufspindel-Art ist.

5. Fräsmaschine nach einem oder mehreren der vorhergehenden Ansprüche, dadurch gekennzeichnet, daß die mechanischen/fluiddynamischen Rotationsmittel einen dritten Motor (32) zur Betätigung eines Werkzeugs (100) umfassen, das an dem Werkzeughalterkopf gehalten wird, wobei die Antriebswelle (33) des Motors ein damit verkeiltes drittes Zahnrad (34) aufweist, ein zweiter Zahnriemen (35) mit dem dritten Zahnrad in Eingriff steht und auch mit einem vierten Zahnrad (36) in Eingriff steht, welches starr drehbar mit einer zweiten Übertragungswelle (37) gekoppelt ist, die ein sechstes Ritzel (38) aufweist, das mit einem anderen Ende davon verstiftet ist, das sechste Ritzel mit einem siebten Ritzel (39) kämmt, das mit einer Werkzeughalterwelle (40) verkeilt ist, wobei die zweite Übertragungswelle drehbar in einem ersten Führungselement (41) durch die Anordnung von Lagern (42) zwischen ihnen und in einem zweiten Führungselement (43) durch axiale Gleitlager (43a) gehalten wird.

6. Fräsmaschine nach einem oder mehreren der vorhergehenden Ansprüche, dadurch gekennzeichnet, daß sie einen ringförmigen Kolben (44) umfaßt, der starr mit dem ersten Führungselement verbunden und fluiddynamisch betätigbar ist, wobei das erste Führungselement eine kegelstumpfförmige Kupplung (41a) bildet, die herausnehmbar in einem kegelstumpfförmigen Sitz (41b) angeordnet werden kann, der in einem Element ausgebildet ist, das den Verschluß der Gleitkammer des ringförmigen Kolbens bildet, wobei die Gleitkammer des ringförmigen Kolbens in einem kastenähnlichen Element (45) ausgebildet ist, welches Öffnungen (47-48) für das Einströmen und das Ausströmen des Fluids zur Bewegung des ringförmigen Kolbens aufweist.

7. Fräsmaschine nach einem oder mehreren der vorhergehenden Ansprüche, dadurch gekennzeichnet, daß sie ein Schraubenradgetriebe (49) umfaßt, das starr mit dem ringförmigen Kolben verbunden ist und mit einer dritten Übertragungswelle (50) kämmt, die von einem sechsten Zahnrad (51) gedreht wird, mit dem ein dritter Zahnriemen (52) in Eingriff kommt, wobei sich der dritte Riemen um ein siebtes Zahnrad (53) herum erstreckt, welches mit einer Antriebswelle (54) eines vierten Motors (55) verstiftet ist, der starr von dem ersten kastenähnlichen Element gehalten wird, um die Werkzeughalteranordnung zu drehen.

8. Fräsmaschine nach einem oder mehreren der vorhergehenden Ansprüche, dadurch gekennzeichnet, daß die dritten Bewegungsmittel einen fünften Motor (56) umfassen, wobei dessen Antriebswelle (57) mit einer Spielraumrückgewinnungsachraube (58) verbunden ist, die mit einem achten Zahnrad (59) kämmt, das starr an einem Abschnitt (60) des Tisches befestigt ist, der sich hinsichtlich einer Grundfläche (61) davon dreht.

9. Fräsmaschine nach einem oder mehreren der vorhergehenden Ansprüche, dadurch gekennzeichnet, daß sie eine numerische Steuerungseinheit zum Antreiben und Koordinieren aller Motormittel umfaßt.

## Revendications

1. Fraiseuse à portique destinée en particulier à usiner des matériaux pierreux et l'analogue, comprenant des rails longitudinaux allongés parallèles l'un à l'autre (1, 2) sur lesquels est couplé un portique (5) de sorte qu'il puisse effectuer un mouvement de translation; une table (8) sur laquelle sont disposés lesdits matériaux pierreux; ledit portique supportant au moins un chariot (6) qui lui est couplé de façon à pouvoir effectuer un mouvement de translation; ledit chariot étant équipé d'une tête porte-outil (7) pour effectuer des opérations d'usinage sur un monolithe, fait de matériaux pierreux, disposé sur ladite table (8); une tige filetée longitudinale allongée (9, 10) solidarisée de chacun desdits rails et couplée à des premiers moyens (11-22) pour déplacer ledit portique; au moins une tige filetée transversale (25) étant solidarisée dudit portique; des deuxièmes moyens (26, 31) pour déplacer le chariot couplé à ladite tige transversale; ladite tête porte-outil (7) pouvant effectuer un mouvement de translation dans une direction pratiquement verticale, ce mouvement de translation étant perpendiculaire à la portée dudit portique; ladite tête porte-outil (7) pouvant tourner angulairement par rapport au chariot correspondant en vertu de moyens de rotation mécaniques/fluodynamiques (32, 55); des troisièmes moyens de déplacement (56-61) adaptés pour faire tourner angulairement ladite table (8) par rapport audit portique (5);
caractérisé en ce que lesdits premiers moyens de déplacement (11-22) comprennent un premier moteur (11) solidarisé dudit portique, un premier pignon (13) étant claveté sur l'arbre d'entraînement (12) dudit premier moteur, ledit premier pignon engrenant avec un deuxième pignon (14) claveté sur un premier élément taraudé (15) supporté à rotation par une première portion de couplage (16) pour coupler ledit portique à l'un desdits rails (1, 2), ledit premier élément taraudé coopérant avec le filetage extérieur de ladite tige filetée, ledit deuxième pignon engrenant avec un troisième pignon (17) claveté sur un premier arbre de transmission (18) s'étendant sur toute la portée dudit portique jusqu'à une deuxième portion de couplage (19) pour coupler ledit portique à l'autre rail, lequel est parallèle au rail précédent, un quatrième pignon (20) étant claveté sur une extrémité dudit premier arbre de transmission (18) pénétrant dans ladite deuxième portion de couplage (19), ledit quatrième pignon (20) étant couplé à un cinquième pignon (21) claveté sur un deuxième élément taraudé (22) qui est supporté en rotation par ladite deuxième portion de couplage (19) dudit portique (5), ledit deuxième élément taraudé (22) coopérant avec le filetage de la tige filetée respective, ledit premier moteur étant approprié pour produire le mouvement de translation dudit portique le long desdits rails (1, 2), ledit portique (5) étant solidarisé de ladite première portion de couplage (16) et étant fixé sur ladite deuxième portion de couplage (19) au moyen d'un premier joint coulissant (23) approprié pour compenser les allongements thermiques dudit portique; et en ce que le premier arbre de transmission (18) a, dans une portion médiane, un deuxième joint coulissant (24) le divisant en deux parties (18a, 18b) couplées l'une à l'autre en rotation, ledit deuxième joint coulissant étant approprié pour compenser les allongements thermiques desdites parties (18a, 18b) dudit premier arbre de transmission (18).

2. Fraiseuse selon la revendication 1, caractérisée en ce que lesdits premier et deuxième éléments taraudés (16, 22) sont du type vis à billes.

3. Fraiseuse selon une ou plusieurs des revendications précédentes, caractérisée en ce que lesdits deuxièmes moyens de déplacement comprennent un deuxième moteur (26) solidarisé dudit chariot, une première roue dentée (28) étant clavetée sur l'arbre d'entraînement (27) dudit deuxième moteur, une première courroie de transmission crantée (29) coopérant avec ladite première roue dentée, et coopérant également avec une deuxième roue dentée (30) clavetée sur un troisième élément taraudé (31) qui est solidarisé dudit chariot et qui tourne angulairement par rapport à lui, ledit troisième élément taraudé coopérant avec le filetage extérieur de la tige transversale respective, ledit deuxième moteur étant approprié pour produire le mouvement de translation dudit chariot le long dudit portique.

4. Fraiseuse selon l'une ou plusieurs des revendications précédentes, caractérisée en ce que ledit troisième élément taraudé est du type vis à billes.

5. Fraiseuse selon l'une ou plusieurs des revendications précédentes, caractérisée en ce que lesdits moyens de rotation mécaniques/fluodynamiques comprennent un troisième moteur (32) pour actionner un outil (100) supporté sur ladite tête porte-outil, une troisième roue dentée (34) étant clavetée sur l'arbre d'entraînement (33) dudit moteur, une deuxième courroie crantée (35) coopérant avec ladite troisième roue dentée et coopérant à son tour avec une quatrième roue dentée (36) qui est solidarisée en rotation d'un deuxième arbre de transmission (37) sur l'autre extrémité duquel est claveté un sixième pignon (38), ledit sixième pignon engrenant avec un septième pignon (39) claveté sur l'arbre porte-outil (40), ledit deuxième arbre de transmission étant supporté en rotation à l'intérieur d'un premier élément de guidage (41) au moyen de l'interposition de paliers (42) et à l'intérieur d'un deuxième élément de guidage (43) au moyen de paliers coulissants axiaux (43a).

6. Fraiseuse selon l'une ou plusieurs des revendications précédentes, caractérisée en ce qu'elle comprend un piston annulaire (44) solidarisé du premier élément de guidage et pouvant être actionné fluodynamiquement, ledit premier élément de guidage formant un couplage analogue à un tronc de cône (41a) qui peut être associé de façon amovible à un siège en forme de tronc de cône (41b) formé dans un élément constituant la fermeture de la chambre de coulissement dudit piston annulaire, la chambre de coulissement dudit piston annulaire étant formée dans un élément analogue à un caisson (45) ayant des ouvertures (47, 48) pour l'entrée et la sortie du fluide pour déplacer ledit piston annulaire.

7. Fraiseuse selon l'une ou plusieurs des revendications précédentes, caractérisée en ce qu'elle comprend un pignon hélicoïdal (49) solidarisé dudit piston annulaire et engrenant avec un troisième arbre de transmission (50) entraîné en rotation par une sixième roue dentée (51) sur laquelle engrène une troisième courroie crantée (52), ladite troisième courroie s'étendant autour d'une septième roue dentée (53) clavetée sur un arbre d'entraînement (54) d'un quatrième moteur (55) qui est solidarisé dudit premier élément analogue à un caisson, afin de faire tourner l'ensemble du porte-outil.

8. Fraiseuse selon l'une ou plusieurs des revendications précédentes, caractérisée en ce que lesdits troisièmes moyens de déplacement comprennent un cinquième moteur (56), dont l'arbre d'entraînement (57) est couplé à une vis de rattrapage de jeu (58) engrenant avec un huitième pignon (59) solidarisé d'une portion (60) de ladite table qui tourne par rapport à une base (61) de celle-ci.

9. Fraiseuse selon l'une ou plusieurs des revendications précédentes, caractérisée en ce qu'elle comprend une unité de commande numérique pour entraîner et coordonner tous lesdits moyens de moteur.
